# EUROPÄISCHE PATENTSCHRIFT

(11) **EP 1 782 582 B1**
(45) Veröffentlichungstag und Bekanntmachung des Hinweises auf die Patenterteilung: **05.10.2011**
(21) Anmeldenummer: 05779142.8
(22) Anmeldetag: 15.08.2005
(51) Int. Cl.: H04L 12/42

(54) **SCHIFF MIT EINEM DATENNETZWERK**
SHIP WITH A DATA NETWORK
NAVIRE EQUIPE D'UN RESEAU DE DONNEES

(30) Priorität: 27.08.2004 DE 102004041820
(43) Veröffentlichungstag der Anmeldung: 09.05.2007
(73) Patentinhaber: SIEMENS AKTIENGESELLSCHAFT, 80333 München (DE)
(72) Erfinder: JESTEL, Dieter, 23843 Bad Oldesloe (DE); PRÜFER, Jens, 50674 Köln (DE)
(86) Internationale Anmeldenummer: PCT/EP2005/054008
(87) Internationale Veröffentlichungsnummer: WO 2006/021530

(56) Entgegenhaltungen:
- EP-A- 1 320 223
- WO-A-03/073705
- US-A1- 2002 159 402
- US-A1- 2003 043 799
- US-A1- 2003 206 548
- SHAH M YIP EXTREME NETWORKS S: "Extreme Networks' Ethernet Automatic Protection Switching (EAPS) Version 1" IETF STANDARD, INTERNET ENGINEERING TASK FORCE, IETF, CH, Oktober 2003 (2003-10), XP015009401 ISSN: 0000-0003

## Beschreibung

Die Erfindung betrifft ein Schiff mit einem Dienste integrierenden Netzwerk, insbesondere einem Service integrated Network, für Sicherheits- und Kontrolldienste und/oder für Multimedia- und Infotainmentdienste auf dem Schiff, wobei das Dienste integrierende Netzwerk sowohl Dienste für sicherheitsrelevante Systeme als auch Dienste für nichtsicherheitsrelevante Systeme aufweist.

Passagiere und Besatzung von Kreuzfahrtschiffen haben hohe Ansprüche im Hinblick auf Kommunikation, Information und Unterhaltung. Das beinhaltet Intranet-/Internet-Zugang, E-Mailsystem, web-basierende Informationssysteme, Spiele und zu jedem Zeitpunkt die Verfügbarkeit einer umfangreichen Auswahl an Video/Audio-Anwendungen.

Die heutige Situation der Netzwerklösungen an Bord eines Kreuzfahrtschiffes ist durch eine Vielzahl von Service-Funktionen und einzelnen Netzwerken die über das ganze Schiff verteilt sind, beschrieben. Heute hat nahezu jeder Service sein eigenes unabhängiges Netzwerk. Das bedeutet eine separate Verkabelung für jeden Service und deshalb einen hohen Aufwand für Installationsarbeiten. Zusätzlich hat jeder Service bzw. Dienst seine eigenen Netzwerkkomponenten, was es sehr schwierig und teuer macht, diese Netzwerke aufrecht zu erhalten.

Das Dokument US2002/0159402 offenbart ein Schiff mit einem Dienste integrierenden, redundanten Ringnetzwerk. Das Dokument WO03/073705 offenbart ein Flugzeug mit einem redundanten Ringnetzwerk mit Lichtwellenleitern und doppelter Leitungsauslegung.

Der Erfindung liegt in Anbetracht dieses Standes der Technik die **Aufgabe** zugrunde, die Vielzahl von Service-Funktionen und einzelnen Netzwerken, die über das ganze Schiff verteilt sind, in einem Netzwerk zu integrieren, diese dabei auch noch mit sicherheitsrelevanten Diensten zu kombinieren und dabei den damit einhergehenden Hochverfügbarkeitsanforderungen genügt, wobei dies unter Berücksichti-gung einer Kostenersparnis sowie der Hochperformanceanforderungen moderner Datennetze geschehen soll.

Diese Aufgabe wird erfindungsgemäß dadurch gelöst, dass das eingangs genannte Dienste integrierendes Netzwerk sowohl für Dienste von sicherheitsrelevanten Systemen als auch für Dienste von nichtsicherheitsrelevanten Systemen als ein redundanter Ring aufgebaut ist. Damit kann die Vielzahl von Sicherheitsfunktionen und Service-Funktionen, zu denen auch die Komfortfunktionen zählen, beide im folgenden Dienste genannt, und die damit einhergehende Vielzahl von einzelnen Netzwerken mit Vorteil auf ein gemeinsames hochsicheres Netzwerk reduziert werden. Eine einheitliche Infrastruktur sorgt für einen reduzierten Verkabelungsaufwand, geringere Anschaffungs- und Betriebskosten, vereinfachte Wartung und vor allem auch für eine bessere Verfügbarkeit der übertragenen Informationen an nahezu jedem Ort des Schiffes.

Unter "redundant" wird im Zusammenhang mit der Erfindung jegliche Ausführung verstanden, welche bei Ausfall eines Teils des Netzwerks die Kommunikation aufrechterhält, z.B. die Möglichkeit eines bidirektionalen Datenverkehrs auf dem Ring und/oder mehrere parallele Ringe oder Teilringe. Oder anders gesagt, dass mehrfache Vorhandensein von gleichen Komponenten zum Zweck der Erhöhung der Ausfallsicherheit des Gesamtsystems, wird als "redundant" bezeichnet.

Zweckmäßig ist, dass die Dienste für sicherheitsrelevante Systeme einen oder mehrere der folgenden Dienste umfassen:
- einen Dienst für die Überwachungs- und Steuerungsanlagen, insbesondere einschließlich eines Dienstes für ein Notabschaltesystem und/oder insbesondere eines Dienstes für eine Steuerung wasserdichter Türen,
- einen Dienst für ein Sicherheitsmanagementsystem und optional für dessen Subsysteme,
- einen Dienst für ein Lautsprechersystem, zum Beispiel für ein Public-Anouncement-System.

Durch die über die unterschiedlichen Dienste einheitlich zur Verfügung stehenden Daten kann die Effizienz eines Schiffsmanagementsystems erheblich verbessert werden.

Eine weitere Steigerung der Effizienz der Datenverarbeitung und der Datenauswertung für ein Schiffsmanagementsystem bzw. der Verbesserung von Komfort- und Servicefunktionen wird dadurch erreicht, dass die Dienste für nicht sicherheitsrelevante Systeme einen oder mehrere der folgenden Dienste umfassen, hiervon vorzugsweise sowohl ein Servicedienst als auch ein Komfortdienst:
- einen Dienst für Infotainment, insbesondere umfassend Information und Entertainment, vorzugsweise einschl. TV/Radio,
- einen Telefondienst,
- einen Dienst für ein Bildüberwachungssystem,
- einen Dienst für ein Kassensystem,
- einen Dienst für ein PC-Netzwerk,
- einen Dienst für Klimaanlagen-Steuergeräte,
- einen Dienst für Beleuchtung,
- einen Dienst für die Türüberwachung.

Auf Passagierschiffen können somit mit Vorteil für Passagiere und für die Besatzung zum Teil völlig neue Service- und Komfortangebote genutzt und/oder leichter bereitgestellt werden.

In weiterer bevorzugter Ausgestaltung umfasst das Dienste integrierende Netzwerk zusätzliche Dienste für besonders kritische Systeme,
insbesondere eine Feuermeldeanlage (F1), insbesondere Dienste für Alarmsysteme und/oder Dienste für die Schiffs-Automation. Beispielsweise sind dann die Dienste für die Steuerung einer Ruderanlage, für den Schiffsantrieb und/oder für die Energieversorgung des Schiffs, Bestandteil des Dienste integrierenden Netzwerks. Somit wird z.B. die Einführung eines Voyage Data Recorders für das Schiff, die die Ingenieure immer wieder vor eine schwierige Aufgabe stellt, erheblich vereinfacht. Die Informationen zwischen den Diensten und/oder die Daten der Dienste für die unterschiedlichsten Systeme kann dem Voyage Data Recorder über das gemeinsame Netzwerk zentral zur Verfügung gestellt werden.

Eine bevorzugte Ausführungsform der Erfindung ist, dass für die Datenverteilung und/oder Datenanbindung, beispielsweise für die Bereitstellung von Komfort- und Servicediensten in einer Passagierkabine, ein mit dem Ring in Verbindung stehender Kabinenschnittstellenvervielfacher vorhanden ist.
Die Kabinenschnittstellenvervielfacher bieten eine kostenoptimierte Schnittstelle zwischen dem Dienste integrierenden Netzwerk und den anzuschließenden Endgeräten.

Vorzugsweise sind mit dem Kabinenschnittstellenvervielfacher Endgeräte für zumindest zwei unterschiedliche Dienste anbindbar. Die Dienste für die Standardendgeräte wie z.B. Heizungsund Klimaanlagenbediengeräte oder die Anschaltung eines Telefons für einen Telefondienst sind mit dem Kabinenschnittstellencontroller realisiert.

Zweckmäßig ist, dass einer der Dienste ein Infotainmentdienst ist, beispielsweise ein Radio und TV-Dienst, insbesondere ein Dienst der Multimedia- und Infotainmentdienste. Passagiere können mit Hilfe einer integrierten Netzwerklösung und dem über den Kabinenschnittstellenvervielfacher bereitgestellten Zugang zum Dienste integrierenden Netzwerk eine völlig neue Klasse von Diensten, wie z.B. Internetzugang, on-board Email System, Video-on-demand und Multimedia-Entertainment, in ihren Kabinen genießen.

Mit Vorteil ist der Kabinenschnittstellenvervielfacher im Bereich der Trennwand zwischen zwei Kabinen angeordnet. Mit dieser Anordnung werden beispielsweise zwei Kabinen über genau einen Kabinenschnittstellenvervielfacher, mit beispielsweise 6 Ports, mit z.B. den Diensten für je ein Telefonendgerät, für je ein Heizungs- und Klimaanlagenbediengerät und für je ein Radio/TV-Engerät versorgt. Die Versorgung von zwei Passagierkabinen über einen Kabinenschnittstellenvervielfacher spart eine separate Verkabelung für jede Kabine und reduziert somit die Kosten für Installationsarbeiten und Material.

Eine weitere Kostenersparnis wird dadurch erreicht, dass der Kabinenschnittstellenvervielfacher zur Versorgung mehrerer in räumlicher Nähe zueinander angeordneter Kabinen hergerichtet ist.

Vorzugsweise ist der Kabinenschnittstellenvervielfacher derart hergerichtet, dass er die Funktion eines Switches aufweist, also z.B. die Funktion, selbsttätig entscheiden zu können an welchem Port ein gerade eingetroffenes Telegramm oder Datenpaket wieder herausgeschickt wird. Wenn zwei Endgeräte gleichzeitig senden, gibt es keine Datenkollision, da der Kabinenschnittstellenvervielfacher intern beide Sendungen nahezu gleichzeitig übermitteln kann.

Mit Vorteil ist der Kabinenschnittstellenvervielfacher zur Umwandlung von Analogtelefondaten in Voice-over-IP-Daten hergerichtet. Es können dadurch beispielsweise kostengünstige Telefonendgeräte auf einfachste Weise über den Kabinenschnittstellenvervielfacher an das Dienste integrierende Netzwerk angeschlossen werden. Über die im Dienste integrierenden Netzwerk eingebundenen Telefonanlagen kann das Telefonendgerät dem Passagier alle Leistungsmerkmale einer modernen Telefonanlage bieten.

Vorzugsweise ist das Dienste integrierende Netzwerk in virtuelle LAN-Gruppen unterteilt, wobei den virtuellen LAN-Gruppen jeweils der Datenverkehr mindestens, vorzugsweise genau eines Dienstes zugeordnet ist. Durch die Einteilung des Netzwerkes in VLAN Gruppen (Virtual LAN) wird das physikalische Netzwerk in unabhängige logische Netzwerke unterteilt. Das führt zu einer Entflechtung des Datenverkehrs und verhindert, dass beispielsweise sensible oder betriebswichtige Daten überhaupt in den Passagierbereich gelangen.

Eine andere bevorzugte Ausführungsform der Erfindung ist, dass jedes Deck mindestens einen Schnittstellenvervielfacher, der mit dem Ring in Verbindung steht, aufweist. Der Schnittstellenvervielfacher stellt ausgehend von einem Eingangsport, die Verbindung zum Ring, beispielsweise 48 neue Ethernetschnittstellen, an die wiederum beliebige Endgeräte z.B. Kabinenschnittstellenvervielfacher oder ein Kassensystem angeschlossen sind, zur Verfügung. Auch könnten an einen Schnittstellenvervielfacher auf einem beliebigen Deck beispielsweise die Datenleitungen eines Automatisierungs-Systems angeschlossen werden. Durch diese Verteilung steht annährend an jedem Ort des Schiffes ein Zugang zum Dienste integrierenden Netz zur Verfügung. Auf eine Topologie-Änderung der Endgeräteverteilung kann zudem schnell und ohne hohen Aufwand reagiert werden.

Mit Vorteil steht mindestens ein Schnittstellenvervielfacher in einer Reihenschaltung ausgehend von einem Switch eines ersten Netzsegments mit dem Switch eines zweiten Netzsegments, insbesondere als ein redundanter Schnittstellenring mit doppelter Leitungsauslegung, in Verbindung. Diese Kaskadierung der Schnittstellenvervielfacher mit doppelter Leitungsauslegung hat gegenüber einer Sterntopologie zwei entscheidende Vorteile zum Einen können Kabel- und Installationskosten gespart werden, zum Anderen wird die Datensicherheit erhöht.

In einer weiterführenden Ausgestaltung ist ein Schnittstellenvervielfacher derart hergerichtet, dass er bei Einsatz für ein Endgerät mit geringer Leistungsaufnahme, beispielsweise ein Telefon, eine integrierte Stromversorgung aufweist. Die Endgeräte mit beschränkter Leistungsaufnahme sind dann nur durch Anschluss an das Dienste integrierende Netzwerk einsatzbereit. Eine separate Stromversorgung ist nicht erforderlich. Ein Power Over LAN System bindet Endgerät mit geringer Leistungsaufnahme über das Ethernetkabel mit Strom an. Dadurch werden die Kosten bei der Installation weiterhin wesentlich verringert und zusätzliche Sicherheiten erreicht.

Zweckmäßig ist, dass das Dienste integrierende Netzwerk die Daten der Dienste für sicherheitsrelevante Systeme und optional die Daten der Dienste für besonders kritische Systeme mit höchster Priorität transportiert. Durch eine Priorisierung der Daten und durch ein Bandbreitenmanagement, den so genannten QoS oder "Quality of Service"-Merkmalen, die beispielsweise im IPv6-Protokoll besonders unterstützt werden, ist außerdem gewährleistet, dass die vom Volumen zwar geringen, aber extrem wichtigen Steuer- und Sensordaten nahezu ohne Verzögerung weitertransportiert werden. Durch die zusätzlich redundante Auslegung des Netzwerkes ist die Betriebssicherheit zu allen Zeiten gewährleistet.

In weiterer zweckmäßiger Ausgestaltung ist das Dienste integrierende Netzwerk zumindest für zwei Dienste, insbesondere für die Dienste der sicherheitsrelevanten Systeme und optional für die Dienste der besonders kritischen Systeme, mit einheitlichen Schnittstellen und/oder einem einheitlichen Protokoll hergerichtet. Einheitliche Schnittstellen und Protokolle ermöglichen die modulare, systemoffene Gestaltung und durch die Benutzung von Standard-Komponenten kann ein kundenspezifisches Netzwerksystem geschaffen werden, das die spezifischen Anforderungen eines jeden Schiffs erfüllt. Das Dienste integrierende Netzwerk kann an geänderte Anforderungen jederzeit schnell und einfach angepasst werden, eine zusätzliche Verkabelung wird hierzu nicht benötigt.

Mit Vorteil weist das Dienste integrierende Netzwerk wenigstens zwei räumlich voneinander getrennte autarke Netzsegmente auf, die über den Ring miteinander in Verbindung stehen. Vorzugsweise weist jedes der Netzsegmente eine eigenständige Strom- oder Notstromversorgung auf, um im Bedarfsfall sich selbst versorgen zu können.

In einer weiteren vorteilhaften Ausgestaltung weist bei einem Schiff mit mehreren Feuerzonen jede der Feuerzonen einen Netzwerkraum auf.

Zweckmäßig ist, dass jeder Netzwerkraum einen Server und eine Telefonanlage aufweist und in einer Sicherheitszone mit einer über die Sicherheitsstufe der übrigen Feuerzonen des Schiffs hinausgehenden Sicherheitsanforderung angeordnet_ist.

Eine andere bevorzugte Ausführungsform ist, dass das Dienste integrierende Netzwerk nach der Ethernet-Technologie, insbesondere nach der Ethernet-Automatic-Protection-Switching (EAPS) Technologie hergerichtet ist. Die EAPS-Technologie, insbesondere das EAPS Protokoll, ist ein Redundanzprotokoll basierend auf "Layer zwei" des "Sieben-Schichtenmodells" und optimiert für ein schnelles Umschalten im Fehlerfall. Ideal für große Netze bei denen Sternverkabelungen einfach zu viele Leitungen benötigen würden.

Zweckmäßig ist es ferner, dass das Dienste integrierende Netzwerk ein oder mehrere der folgenden Protokolle nutzt:
- TCP/IP-Protokoll,
- UDP/IP-Protokoll,
- RTP/IP-Protokoll,
- RSVP-Protokoll,
- SMTP-Protokoll,
- NTP-Protokoll,
- SIP-Protokoll,
- H.323-Protokoll,
- DHCP-Protokoll,
- IGMP-Protokoll,
- EAPS-Protokoll.

Weiterhin ist es zweckmäßig, dass der Ring einen Lichtwellenleiter aufweist. Ein Ring auf Lichtwellenleiter-Technik hat neben den Vorteilen der Potentialtrennung und der Störunanfälligkeit gegen EMV-Beeinflussungen den großen Vorteil der Gewichtseinsparung. Nicht nur die Verbindungen für den Ring, also den eigentlichen Backbone, sondern auch für die anderen Verbindungen beispielsweise von einem Switch zu einen Schnittstellenvervielfacher auf Deck oder für die optional ausgebildeten Schnittstellenringe können Lichtwellenleiter eingesetzt werden.

Bevorzugte, jedoch keinesfalls einschränkende Ausführungsbeispiele der Erfindung werden nunmehr anhand der Zeichnung näher erläutert. Zur Verdeutlichung ist die Zeichnung nicht maßstäblich ausgeführt, und gewisse Merkmale sind nur schematisiert dargestellt. Im Einzelnen zeigt die
- FIG 1: den grundsätzlichen Aufbau eines Dienstes integrie- renden Netzwerks mit einem über ein Schiff verteilten redundanten Ring,
- FIG 2: das Dienste integrierende Netzwerk aus Fig.1 im De- tail,
- FIG 3: einen Kabinenschnittstellenvervielfacher für zwei Ka- binen des Schiffs mit jeweils drei Endgeräten.

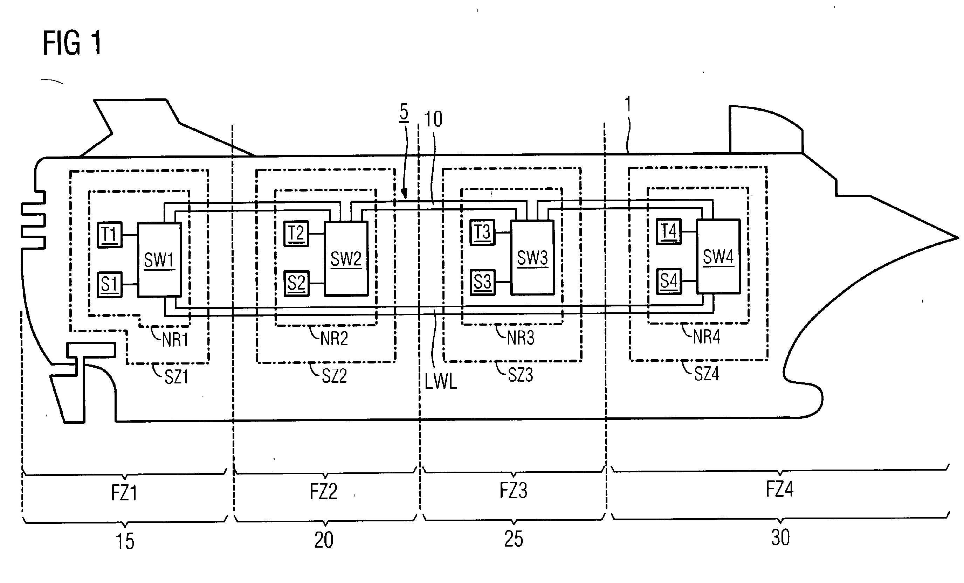

Figur 1 zeigt ein über ein Schiff 1 verteiltes Dienste integrierendes Netzwerk 5. Das Dienste integrierende Netzwerk 5 ist als ein redundanter logischer Ring 10 nach der EAPS-Technologie aufgebaut. Das hier eingesetzte EAPS-Protokoll ist ein Redundanzprotokoll basierend auf "Layer 2" und optimiert für ein schnelles Umschalten im Fehlerfall. Es bietet bei großen Netzen auf Schiffen, bei denen eine Sternverkabelung zu viele Leitungen benötigen würde, erhebliche Kostenvorteile. Der Ring 10 ist vom Heck des Schiffes 1 an der Backbordseite von einem ersten Switch SW1, in der Feuerzone FZ1, zu einem zweiten Switch SW2, in der Feuerzone FZ2, und von hier zu einem dritten Switch SW3, in der Feuerzone FZ3, und von dem dritten Switch SW3 zu einem vierten Switch SW4, in der Feuerzone FZ4, bis zum Bug geführt. Vom Bug aus erfolgt die Leitungsführung auf der Steuerbordseite vom vierten Switch SW4 wieder zurück zum Heck und somit zum ersten Switch SW1.

Der Ring 10 ist mit den intelligenten und hochperformanten Switches SW1 bis SW4 verbunden und stellt somit den Backbone des Dienste integrierenden Netzwerkes 5 dar. Der Ring 10 ist als ein Lichtwellenleiter LWL ausgelegt. Die Leitungsführung des Ringes 10 ist doppelt ausgelegt, wobei die beiden Lichtwellenleiter auf unterschiedlichen Wegen geführt werden. Am Beispiel der Direktverbindung zwischen dem ersten Switch SW1 und dem zweiten Switch SW2 ist die doppelte Leistungsführung erklärt: Betrachtet man die doppelte Direktverbindung zwischen dem ersten Switch SW1 und dem zweiten Switch SW2, so ist der erste Lichtwellenleiter auf dem Oberdeck geführt und der zweite Lichtwellenleiter ist auf einem darunter liegendem Deck von dem zweiten Switch SW2 zurück zu dem ersten Switch SW1, geführt. Die Leitungsführung ist Fig. 1 nur stark schematisiert zu entnehmen.

Jeder Switch SW1 bis SW4 ist in einem Netzwerkraum NR1 bis NR4 untergebracht. Die Netzwerkräume NR1 bis NR4 befinden sich wiederum in Sicherheitszonen SZ1 bis SZ4. Die Sicherheitsanforderungen der Sicherheitszonen SZ1 bis SZ4 gehen über die Sicherheitsanforderungen von herkömmlichen Feuerzonen FZ1 bis FZ4 hinaus. Durch die Anordnung der Switches SW1 bis SW 4 in den Sicherheitszonen ist die Ausfallsicherheit besonders hoch. Der Backbone, also das Rückgrad des Dienste integrierenden Netzwerkes 5, ist analog zu den Feuerzonen FZ1 bis FZ4 des Schiffes 1 in vier Netzwerksegmente 15, 20, 25 und 30 unterteilt. Die Netzsegmente 15, 20, 25, 30 können völlig autark arbeiten, d.h. selbst bei vollständigem Ausbrennen einer Feuerzone können die anderen drei Netzsegmente unabhängig von dem zerstörten Netzsegment ihre Aufgaben weiter erfüllen. Der autarke Betrieb eines Netzsegmentes wird dadurch realisiert, dass jeder Netzwerkraum NR1 bis NR 4 neben dem intelligenten und hochperformanten Switch SW1 bis SW 4 je eine eigenständige Telefonanlage T1 bis T4 und je einen Server S1 bis S4 aufweist. Für den autarken Betrieb ist zusätzlich eine Notstromversorgung, also eine unterbrechungsfreie Stromversorgung nötig (hier nicht gezeichnet).

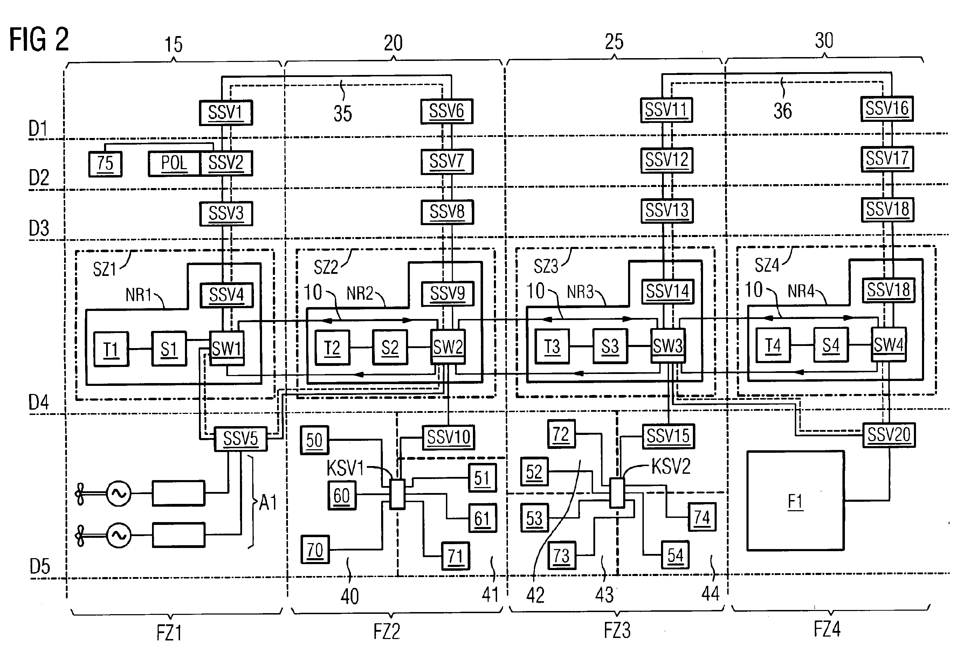

Figur 2 zeigt das Dienste integrierende Netzwerk 5 aus Figur 1 mit einer Datenverteilung über Schnittstellenvervielfacher SSV1 bis SSV20, im Detail. Um die Daten für die unterschiedlichsten Endgeräte auf dem gesamten Schiff 1 zur Verfügung zu stellen, sind auf jedem Deck D1 bis D5 und in jeder Feuerzone FZ1 bis FZ4 Schnittstellenvervielfacher SSV1 bis SSV20 angeordnet. Ausgehend vom Switch SW1 im Netzwerkraum NR1, der sich wiederum in der Sicherheitszone SZ1 der Feuerzone FZ1 befindet, stehen die Schnittstellenvervielfacher SSV1 bis SSV 10 mit den Switches SW1 und SW2 in Verbindung. Jedes Deck D1 bis D5 weist in jeder Feuerzone FZ1 bis FZ4 mindestens einen Schnittstellenvervielfacher SSV1, ..., SSV20 zur Verteilung der Daten und der direkten Anbindung von Endgeräten auf.

Zur Erhöhung der Datensicherheit und zur zusätzlichen Kabeleinsparung sind die Schnittstellenvervielfacher SSV1 bis SSV4 in der Feuerzone FZ1 und die Schnittstellenvervielfacher SSV6 bis SSV9 in der Feuerzone FZ2 bzw. in den Netzsegmenten 15, 20 von Deck 4 bis Deck 1 als ein erster redundanter Schnittstellenring 35 angeordnet. Es existiert also zusätzlich zum redundanten Ring 10, zwischen dem Switch SW1 und dem Switch SW2 eine redundante Verbindung der Schnittstellenvervielfacher SSV1 bis SSV4 und SSV6 bis SSV9. So können selbst bei Totalausfall der redundanten Backboneverbindung zwischen dem Switch SW1 und dem Switch SW2 die Daten über den Schnittstellenring 35 weiterhin geführt werden.

Zum Anschluss von Endgeräten mit geringer Leistungsaufnahme weist der Schnittstellenvervielfacher SSV2 als integrierte Stromversorgung POL ein Power-Over-LAN-System auf, das Endgeräte über das Ethernetkabel mit Strom anbindet. Dadurch werden die Kosten bei der Installation wesentlich verringert und zusätzliche Sicherheiten erreicht. Die integrierte Stromversorgung POL speist Strom für die Ethernetports in das Ethernet-Kabel ein. Im Ethernet-Kabel werden dazu bestimmte Adern verwendet. Die integrierte Stromversorgung POL kann auch direkt an eine, nicht dargestellte, unterbrechungsfreie Stromversorgung angeschlossen werden, um permanent Versorgungsspannung an den Ethernetports zur Verfügung zu stellen. Ein intelligenter Schutzmechanismus erkennt automatisch Power-over-LAN-fähige Geräte und schaltet erst nach deren Identifizierung die Spannung auf das Ethernet auf. Damit ist ein wirkungsvoller Schutz auch für solche Endgeräte gegeben, die die Power-over-LAN-Technik nicht beherrschen. Ein dargestelltes Telefon 75 ist ein Endgerät mit geringer Leistungsaufnahme und erhält seine Betriebsspannung über die in den Schnittstellenvervielfacher SSV2 integrierte Stromversorgung POL.

Die Verbindung zwischen dem Switch SW3 und dem Switch SW4 ist analog zu dem Schnittstellenring 35 zwischen dem Switch SW1 und dem Switch SW2 durch einen redundanten zweiten Schnittstellenring 36 ergänzt. Alternativ können die Schnittstellenvervielfacher auch in einer Sternschaltung an die Switch SW1 bis SW4 angeschlossen sein. Ausgehend von dem Switch SW2 ist ein Schnittstellenvervielfacher SSV10 direkt an ihn angeschlossen. Der Schnittstellenvervielfacher SSV10 befindet sich auf Deck 5 in der Feuerzone FZ2. An ihn ist als weiteres Endgerät ein Kabinenschnittstellenvervielfacher KSV1 angeschlossen. Der Kabinenschnittstellenvervielfacher KSV1 eröffnet noch einmal die Möglichkeit den über den Schnittstellenvervielfacher SSV10 bereitgestellten Ethernetport weiter zu vervielfachen. Der Schnittstellenvervielfacher SSV10 stellt 40 Ethernetports bereit. An einer dieser Ethernetports ist der Kabinenschnittstellenvervielfacher KSV 1 angeschlossen.

Der Kabinenschnittstellenvervielfacher KSV 1 kann wiederum sechs Ethernetports oder Anschlüsse für Endgeräte bereitstellen. Diese sechs Endgeräteanschlüsse versorgen gleichzeitig zwei Passagierkabinen 40, 41 mit je drei Endgeräteschnittstellen. Die Passagierkabine 40 erhält von dem Kabinenschnittstellenvervielfacher KSV1 drei Endgeräteanschlüsse. Ein erstes Radio/TV-Gerät 50 steht somit über den Kabinenschnittstellenvervielfacher KSV1, über den Schnittstellenvervielfacher SSV10 mit dem Switch SW2 in Verbindung. Durch diese Verbindung mit dem Dienste integrierenden Netzwerk 5 werden sämtliche für die Passagiere benötigten Dienste bis in die Kabinenebene bereitgestellt.

Weiterhin ist an den Kabinenschnittstellenvervielfacher KSV1 ein erstes Klimabedienteil 60 angeschlossen. Über dieses Klimabedienteil 60 kann der Passagier der Kabine 40 die Raumtemperatur und sein bevorzugtes Wohlfühlklima einstellen. Ein drittes Endgerät aus Kabine 40 ist ebenfalls an den Kabinenschnittstellenvervielfacher KSV1 angeschlossen. Das dritte Endgerät ist ein Telefon 70 und steht somit über den Kabinenschnittstellenvervielfacher KSV 1 und dem Schnittstellenvervielfacher SSV 10 mit dem Switch SW2 und dadurch mit der Telefonanlage T2 in Verbindung. So können sämtliche Dienste einer der Telefonanlagen T1 bis T4 bis in die Kabinenebene bereitgestellt werden.

Ein Kabinenschnittstellenvervielfacher KSV1, KSV2 ist nicht ausschließlich für den Einsatz in Passagierkabinen gedacht. So kann er z. B. die Dienste für ein EPOS-Kassensysteme, für ein Passagier-Informationssysteme, für ein Telefon, für Passagier-PCs, für ein Fernsehgerät, für Video-on-demand und/oder für eine Videoüberwachung CC-TV auch in anderen Räumen als den Passagierkabinen bereitstellen. Beispielsweise kann ein Kabinenschnittstellenvervielfacher KSV1, KSV2 auch in einem Konferenzraum oder in einer Lounge die zur Verfügung stehenden Dienste anbieten.

Alternativ zu der Versorgung von zwei Passagierkabinen 40, 41 mit einem Kabinenschnittstellenvervielfacher KSV 1 ist ein weiterer Kabinenschnittstellenvervielfacher KSV2 derart zwischen mehreren Kabinen 42, 43, 44 angeordnet, dass er je eine Kabine mit zwei Diensten versorgen kann. Der Kabinenschnittstellenvervielfacher KSV2 ist über den Schnittstellenvervielfacher SSV 15 an den Switch SW3 angeschlossen und steht somit mit dem Dienste integrierenden Netzwerk 5 in Verbindung. Der Kabinenschnittstellenvervielfacher KSV2 versorgt die dritte Passagierkabine 42 mit einem Radio/TV-Gerät 52 und mit einem Telefongerät 72. Weiterhin werden die vierte Passagierkabine 43 und die fünfte Passagierkabine 44 mit je einem Radio/TV-Gerät 53, 54 und je einem Telefongerät 73, 74 versorgt.

Neben den Diensten für nicht sicherheitsrelevante Systeme, die vorrangig für den Passagierkomfort zur Verfügung stehen, können auch Dienste für sicherheitsrelevante Systeme über das Dienste integrierende Netzwerk 5 geführt werden. Ein sicherheitsrelevantes und zudem auch ein kritisches System, eine Feuermeldeanlage F1, ist über den Schnittstellenvervielfacher SSV20 an den Switch SW4 und an den Switch SW3, jeweils über eine doppelt ausgelegte Verbindung, angeschlossen. Ähnlich wie die Schnittstellenringe 35, 36 bildet die redundante Netzverbindung vom Schnittstellenvervielfacher SSV20 an den Switch SW4 über den Switch SW3, zurück an den Schnittstellenvervielfacher SSV 20, einen Teilring. Da das Dienste integrierende Netzwerk 5 auch Dienste für kritische Systeme bereitstellt, kann die Feuermelderanlage F1 somit ihre Warnoder Evakuiersignale an jedes Endgerät auf dem Schiff absetzen.

Das Dienste integrierende Netzwerk 5 umfasst neben Diensten für nicht sicherheitsrelevante Systeme und für sicherheitsrelevante Systeme auch Dienste für besonders kritische Systeme. Ein besonders kritisches System ist hier ein Automatisierungssystem A1 für den Antrieb des Schiffes 1. Das Automatisierungssystem A1 ist über den Schnittstellenvervielfacher SSV5 durch einen redundanten Teilring an den Switch SW1 und an den Switch SW2 angeschlossen. Die Steuerungs- und Antriebsdaten für das besonders kritische Automatisierungssystem A1 können somit durch einen Dienst für besonders kritische Systeme über das Dienste integrierende Netzwerk 5 mit höchster Priorität zu einer nicht dargestellten Leitwarte und/oder der Schiffsbrücke geführt werden.

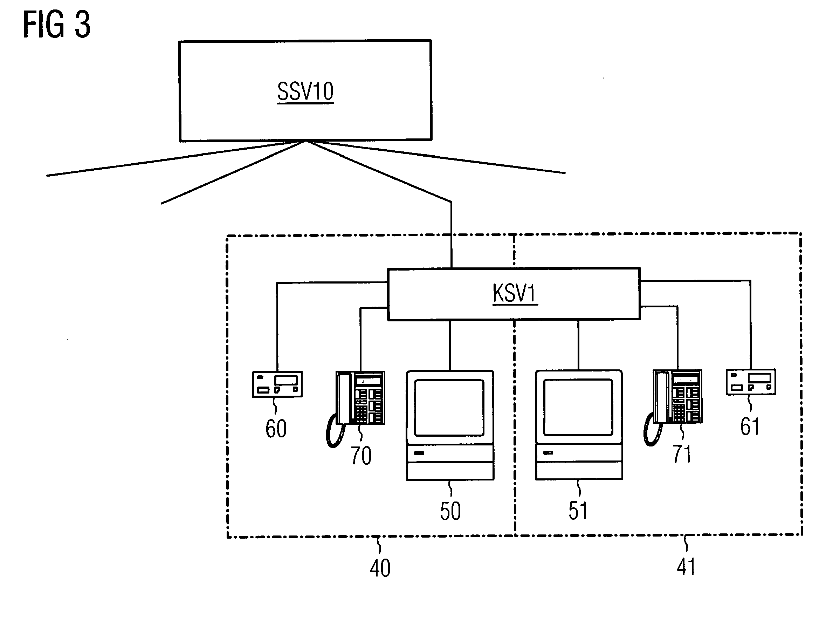

Figur 3 zeigt als Ausschnitt aus Figur 2 die Passagierkabinen 40 und 41 im Detail. Die benachbarten Passagierkabinen 40, 41 weisen an ihrer Trennwand einen Kabinenschnittstellenvervielfacher KSV 1 auf. Dadurch dass ein Kabinenschnittstellenvervielfacher zwei Passagierkabinen, ohne Einbußen an Leistungsund Komfortmerkmalen, mit Diensten bzw. Endgeräten versorgen kann, ist der Aufwand an Kabelverlegung und Kabelinstallation reduziert. Die von dem Schnittstellenvervielfacher SSV10 zum Kabinenschnittstellenvervielfacher KSV 1 geführte Stichleitung ist somit einfach ausgelegt. Der Kabinenschnittstellenvervielfacher KSV 1 kann aufgrund seiner implementierten Funktionalität aus einem Ethernetschnittstellenport sechs E-thernetschnittstellenports bereitstellen. Für eine Standardkabine 40, 41 reicht die Bereitstellung von drei wesentlichen Systemen bzw. Diensten vollkommen aus. Diese drei Dienste sind ein Infotainment-Dienst der ein Radio/TV-Gerät 50 versorgt, ein Klimaanlagendienst, der ein Klimabedienteil 60 an deren Steuerung anschließt, und ein Telefondienst, der über ein Telefon 70 in der Passagierkabine 40 zur Verfügung gestellt wird. In der Passagierkabine 41 gilt dieselbe Bereitstellung der Dienste wie in Kabine 40.

Zusätzlich ergeben sich folgende beispielhafte Ausgestaltungen:

### 1. Kommunikation

Mit Hilfe der drahtlosen Kommunikation und der gemeinsamen Übertragung von Information und Energie über einen Bus ist es möglich, die Einsparpotentiale der Feldbustechnik, die vor allem in der Verkabelung liegen, auf die Energieseite zu übertragen. Der Schaltschrank kann so weitgehend entfallen. Auch für Sicherheitstechnik ist dann kein zusätzlicher Bus mehr notwendig.

Ein ganz wesentliches Kriterium im Schiffsbau ist die Sicherheit der Kommunikation nach und von außen. Sie entscheidet über die Akzeptanz von Internet in der Automation. Besondere Vorteile bietet hierbei die Erweiterung der Standard-Ethernet-Kommunikation um Echtzeitfähigkeit. Als Basistechnologie kann hierbei Profinet verwendet werden, das die Vorteile von Feldbus und Internet-Technologie zusammenbringt. Insbesondere durch ein so genanntes Isochrones Realtime-Ethernet wird auf einem Bus der taktgenaue Gleichlauf von mehr als 100 Antriebsachsen mit einer Abweichung von weniger als einer Mikrosekunde möglich, ohne dass Ethernet-Standardfunktionen beeinträchtigt werden.

### 2. Dienste-Integration

### 2.1 Integrierte Netzwerklösungen

Passagiere von Kreuzfahrtschiffen haben hohe Ansprüche im Hinblick auf Kommunikation, Information und Unterhaltung. Das beinhaltet Intranet-/Internet-Zugang, E-Mailsystem, web-basierende Informationssysteme, Spiele und zu jedem Zeitpunkt die Verfügbarkeit einer umfangreichen Auswahl an Video/Audio-Anwendungen.

### 2.1.1 Integrierte Netzwerklösung für Schiffpassagiere

Passagiere können mit Hilfe einer integrierten Netzwerklösung eine völlig neue Klasse von Diensten, wie z.B. Internetzugang, on-board Email System, Video-on-demand und Multimedia-Entertainment, genießen.

Mit Hilfe einer integrierten Netzwerklösung können Passagiere schneller genauere und personalisierte Informationen über Aktivitäten auf dem Schiff bekommen.

Passagiere haben die Möglichkeit, ihre eigenen Notebooks über wireless lan (WAN) oder über TCP/IP-Anschlüsse anzuschließen, die überall auf dem Schiff in Kabinen und öffentlichen Räumen zugänglich sind.

Natürlich können Passagiere interne und externe Telefonkommunikation über Fest- und Mobiltelefone benutzen.

### 2.1.2 Integrierte Netzwerklösung für Schiffscrews

Für Schiffsbetreiber ist es häufig schwierig, gutes Personal zu finden. Es ist deshalb mehr und mehr wichtig, dem Personal oder der Crew des Schiffs den Aufenthalt an Bord so attraktiv wie möglich zu gestalten. Auch die Crew kann deshalb all die vorteilhaften Passagierdienste benutzen.

Aber auch die Arbeit wird erleichtert. Ein Integriertes Schiffs-Managementsystem integriert alle Sicherheits- und Steuerungs-Systeme. Es enthält weiterhin Mittel zum Sicherheitsmanagement, zur Entscheidungs-Unterstützung, zur präventiven Wartung, und zur intelligenten Datenabspeicherung und Verarbeitung. Die Crew hat ständigen Zugang zu kritischen Betriebsinformationen und bekommt Hinweise und Tipps, falls notwendig. Dies verbessert die Sicherheit des ganzen Schiffs. Die Informationen sind hierbei im Bereich des ganzen Schiffs verfügbar. Notebooks oder kleine Handhelds können über wireless lan (WAN) oder über TCP/IP-Anschlüsse angeschlossen werden.

### 2.1.3 Integrierte Netzwerklösungen für Schiffsbetreiber

Durch die Benutzung von Hochgeschwindigkeits-SatCom-Satellitenverbindungen können alle Schiffs-Informationen zu einem Schiffsbetreiber an Land gesendet werden.

Insbesondere können auch die für die Überwachung des Schiffes an Land zu transferierenden Datenmengen über diese Satellitenverbindung transferiert werden.

Durch ein zusätzliches Virtual Private Network (VPN) kann der Betreiber weltweit Zugriff auf diese Informationen haben.

### 2.1.4. Netzwerk Infrastruktur

An Bord eines Kreuzfahrtschiffes sind heute eine Vielzahl von Service-Funktionen über das ganze Schiff verstreut. Nur sehr wenige von ihnen sind miteinander verbunden oder benutzen die neueste Faseroptik-Technologie. Heute hat jeder Service sein eigenes unabhängiges Netzwerk. Das bedeutet eine separate Verkabelung für jeden Service und deshalb einen hohen Aufwand für Installationsarbeiten. Zusätzlich hat jede der Service seine eigenen Netzwerkkomponenten, was es sehr schwierig und teuer macht, diese Netzwerke aufrecht zu erhalten.

Mit der Erfindung ergeben sich folgende weitere Vorteile:

### a) Sicherer Betrieb des Schiffes und gesamtheitliche Reduzierung der Systemkosten.

Die Benutzung von Faseroptik-Technologie garantiert den höchsten Grad an Sicherheit und Zuverlässigkeit, denn sie sind nicht empfänglich für elektromagnetische Störungen. Kabelschäden, die z.B. durch Feuer verursacht werden, werden das verbleibende Netzwerk nicht beeinflussen.

Die beste Lösung ist, ein gemeinsames Dienste- integrierendes Netzwerk (Service integrated Network) zu benutzen, um alle Dienste und Komponenten in dem Schiff zu koordinieren. Das Dienste integrierende Netzwerk kann Subsysteme wie z.B. Sicherheitskameras, Schiffsmanagement, Lautsprecher Durchsagesysteme, Telefoneinrichtung und Passagier-PCs umfassen.

Das Dienste integrierende Netzwerk kann spezifisch auf einen jeweiligen Betreiber und Schiffswerft angepasst werden. Je nach Bedarf können die hierfür vorliegenden Konzepte weiterentwickelt werden, um Systemkosten zu reduzieren, den Betrieb an Bord des Schiffes und an Land zu optimieren, die Schiffsund Umweltsicherheit zu erhöhen, und die Anforderungen der Klassifikationsgesellschaften zu erfüllen.

Zum Beispiel können durch die Integration aller Sicherheitsund Kontrollsysteme der Crew des Schiffes jederzeit Zugriff auf kritische Betriebsinformationen gegeben werden. Dies erhöht in hohem Umfang die Sicherheit für das ganze Schiff.

Die integrierte Netzwerklösung bietet sowohl die Redundanz von Stand-alone-Netzwerken als auch die hohe Verfügbarkeit aufgrund der Geschwindigkeit und Kosteneffizienz eines einzigen integrierten Systems.

Integrierte Netzwerke mit faseroptischen Backbones helfen nicht nur, die schweren Kupferkabel zu reduzieren, sondern die Gesamtzahl der Kabel und hierbei vor allem im Bereich des Oberdecks die hohen Kabelgewichte zu reduzieren. Sehr wichtig für Schiffswerften ist es, dass integrierte Netzwerke die Planung vereinfachen und die Installationskosten reduzieren.

### b) Vereinfachung von Wartung und Management

Fehlersuche in einer Vielzahl von Netzwerken und zuverlässige Netzwerk-Daten zu erhalten ist eine aufwändige und deshalb teuere Aufgabe. Durch die Benutzung eines einzigen Netzwerks kann die Wartung und Fehlerfindung vereinfacht und deshalb kosteneffizienter gestaltet werden.

Durch die Benutzung von fortschrittlichen aktiven Komponenten ist eine kontinuierliche Selbstüberwachung möglich und können Kabelbrüche und Hardware-Fehler über das gesamte System schnell isoliert und identifiziert werden. Durch eine einfache, präzise Problemlokalisierung können fehlerhafte Teile, wie z.B. elektronische Karten, sofort ersetzt werden, ohne dass der Dienst unterbrochen wird.

### c) Flexibilität

Sowohl Bandbreitenreserven als auch faseroptische Leiter machen eine spätere Erweiterung des Netzwerks besonders einfach und günstig. Beginnend mit einigen wenigen ausgewählten integrierten Diensten kann durch eine Schritt-für-Schritt-Migration ein komplett integriertes Netzwerk erzielt werden. Dienste können hierbei dann hinzugefügt werden, wenn sie benötigt werden.

### d) Neue Möglichkeiten

Ein Dienste-integrierendes Netzwerk macht essentielle Informationen von nahezu jedem Punkt an Bord des Schiffes zugreifbar, und natürlich über Satellitenkommunikation auch von Land.

Die Integration aller Dienste macht es möglich, eine neue Art von Schiffs-Informationsdiensten zu installieren, durch die Passagiere mehr Informationen über die Vielzahl von Aktivitäten an Bord des Schiffs erhalten, während die Crew zu wichtigen Informationen über das Schiff Zugang hat, jederzeit und an jedem Ort an Bord des Schiffs.

Über ein integriertes Netzwerk können Internetzugang und eine völlig neue Klasse von Diensten, wie z.B. Video-on-demand, Multimedia-Spiele und die Schaffung neuer Quellen für Einkünfte ermöglicht werden.

### e) Zukunftssichere Investition und Lösungen

Durch die modulare, systemoffene Gestaltung und durch die Benutzung von Standard-Komponenten kann ein Kundenspezifisches Netzwerksystem geschaffen werden, das die spezifischen Anforderungen eines jeden Schiffs erfüllen kann.

Für den Schutz der Investition kann das System an geänderte Anforderungen jederzeit angepasst werden - schnell und einfach. Keine zusätzliche Verkabelung wird hierzu benötigt.

Das Dienste integrierende Netzwerk basiert auf Standardkomponenten und kann kundenspezifisch gestaltet werden, um die Anforderungen eines jeden Schiffes zu erfüllen. Die Flexibilität aufgrund der Benutzung von Standardkomponenten macht eine nachfolgende Installation (Migration) des Dienste integrierenden Netzwerks möglich.

EPOS-System (Elektronik Point of Sale) oder auch Kassensysteme, Schiffs-Management-System, Schiffs-Informations-System, Telefonsystem (voice over IP), Passagier PC-System, IPbasierendes CCTV-System (Video-Überwachung)und Digital TV-System mit Video/Audio-on-demand.

Das Dienste integrierende Netzwerk garantiert Sicherheit an Bord vorzugsweise durch:
- Hohe Redundanz in Hardware und Kabelquoten,
- unterschiedliche Virtual Local Area Networks (VLANS) für unterschiedliche Dienste,
- Physical Layer Zugangskontrolle über Smart Cards,
- Zusätzliche Higher Layer Protection für kritischen Datenzugriff und Dienste
- starke Verschlüsselung für alle kritischen Daten auf dem Netzwerk,
- ausgefeilte Netzwerk-Management-Werkzeuge.

Weitere Vorteile des Dienste integrierenden Netzwerkes sind:
a) Vorteile für Schiffswerften
   - geringe Investitionskosten aufgrund reduzierter Netzwerkverkabelung und reduzierter Verteilertafeln sowie raumsparende Lösungen;
   - modernste Technologie für höhere Wettbewerbsfähigkeit und Investitionssicherheit.
b) Vorteile für Passagiere
   Fortschrittliche Kommunikationsmittel:
   - TV, Radio, Video/Audio-on-demand;
   - PC-Funktionen
   - Internet, E-Mail;
   - Passagier-Information
   - PC-Spiele
   - Cash Register
c) Vorteile für Schiffseigner
   - Geringe Investitionskosten aufgrund reduzierter Netzwerkverkabelung und reduzierten Verteilertafeln sowie platzsparende Lösungen;
   - geringe Life-Cycle-Kosten
      1) einfacher Upgrade- oder Hinzufügung von zusätzlichen Diensten,
      2) Bandbreitenreserven
      3) reduzierte und vereinfachte Wartung und Management
   - neue Möglichkeiten
   - neue Quellen für Einkünfte können geschaffen werden.
d) Vorteile für den Betreiber:
   - einfacheres Netzwerkmanagement,
   - permanente Verfügbarkeit aller wichtigen Informationen an jedem Ort an Bord des Schiffes,
   - komplette und zuverlässige Informationen aufgrund Redundanz und kontinuierlicher Selbstüberwachung,
   - neue Wege, um wichtige technische und wirtschaftliche Daten zu erhalten und zu verwalten,
   - verbessertes Passagier-Informationssystem,
   - einfach benutzbares Content-management.

### 2.2 Integriertes Schiffs-Managementsystem

Risk and Safety Management-Systeme für den maritimen und industriellen Markt werden aufgrund neuer gesetzlicher Regelungen in den nächsten Jahren einen sehr starken Nachfrageschub verzeichnen.

Die internationalen Gremien und gesetzgebenden Institutionen waren deshalb gefordert, verbindliche und weltweit gültige zwingende Regularien zu schaffen, die Sicherheit auf den Schiffen gewährleisten. Daraus resultierend entstand der ISM-Code (International Safety Management System), dem weltweit rund 67.000 Schiffe über 500 BRT (Brutto-Register-Tonnen) und ca. 12.000 Reedereien unterworfen sind.

Der Schiffsbau entwickelte sich zwar enorm weiter, jedoch gab es bisher besonders in der technischen Ausrüstung keine Komplettlösungen. Es wurden nur Insellösungen für die verschiedensten Bereiche, aber keine Standardisierung erreicht. In Extrem- bzw. Notfällen musste eine einzige Person (Kapitän) bis zu 21 Computer mit unterschiedlichsten Oberflächen (DOS, Windows, XENIX, UNIX, etc.) gleichzeitig bedienen.

Die Lösung dieser Problematik kann durch die Zusammenführung dieser Einzelbereiche erreicht werden - ein technisches Safety Management System, in das alle Systeme eingespeist werden.

Mit der Einführung des ISM-Codes sind nun alle Notfallsituationen (42 Notfallpläne und deren Kombinationen) sowie vorgefertigte Tasklisten (Marine Kill Cards) manuell und automatisch zu verknüpfen. Der ISM-Code schreibt weiterhin ein elektronisches Entscheidungs-Unterstützungs-System ("Decision-Support-System") vor, welches unfallrelevante Daten zusammenzieht, um dem Kapitän eine relevante Entscheidung zu ermöglichen. Zusätzlich sind Wartungs-Überwachung und -Planung, die Dokumentierung sämtlicher Maßnahmen und Situationen, Gefahrengut-Codes, Ladungsstabilitäts- und Damage-Control-Daten, Sicherheits- und Rettungsmittel sowie ein komplettes Schiffs-Info-System (inclusive Visualisierung sämtlicher Decks, Querund Seitenrisse) vorgeschrieben.

Der aktuelle Zustand an Bord ist so, dass mindestens drei, auf manchen Schiffen aber bis zu acht nicht miteinander kompatible Sicherheits-Management-Systeme nebeneinander vorhanden sind.

Eine Verbesserung dieses Zustands wird durch die Zusammenführung aller dieser Systeme zu einem einzigen System erreicht, d.h. ein integriertes Schiffs-Managementsystem (Integrated Ship Management System).

Mit der Einführung des VDAs sowie des AIS-Systems ist zum ersten Mal eine vollkommene Überwachung der Schiffe durch beliebige Küstenstaaten und Behörden möglich. Durch die Einführung der ISM-Codes, STCW 95, Planned and Controlled Maintenance sowie ISO 9002 und zukünftig ISO 14001 auf 60.000 Schiffen und die damit verbundenen Dokumentationspflichten sind Dokumentenmanagement-Systeme (AVECS, QDMS) notwendig, um die Dokumentenflut bewältigen zu können. Jeder technische Vorgang, Sicherheitsmaßnahmen, Arbeits- sowie Ladungsvorgänge müssen durch Checklisten bzw. Prozeduren untermauert werden. Neben der nautischen Seite werden in der Blackbox sämtliche wartungs-, sicherheits- und umwelttechnischen Vorgänge sowie technische Zustände (Alarme) gespeichert. Fehlermanagement-Systeme (siehe AIDA von AVECS) müssen die Abarbeitung von Non-Conformities sowie Deficiencies nachweisen.

Um die immer größer werdende Anzahl von Passagieren bewältigen zu können, müssen Passagierschiffe und Fähren visualisierte Evakuierungspläne mit automatischen Risikoanzeigen im Sicherheitsmanagement-System nachweisen. Eine automatische Realisierung dieses Systems kann über die Einbindung der Buchungssysteme in das integrierte Schiffs-Managementsystem erreicht werden. Für automatische Sicherheits-Rollen sowie zur Erfüllung der Verpflichtungen aus dem STCW-Gesetz wird ein Crew-Management-System (AVACS Crew Master) eingebunden.

## Patentansprüche

1. Schiff (1) mit einem Dienste integrierenden Netzwerk (5), insbesondere einem Service integrated Network, für Sicherheits- und Kontrolldienste und/oder für Multimedia- und Infotainmentdienste auf dem Schiff (1), wobei das Dienste integrierende Netzwerk (5) sowohl Dienste für sicherheitsrelevante Systeme und kritische Systeme (A1, F1) als auch Dienste für nichtsicherheitsrelevante Systeme aufweist, wobei das Dienate integrierende Netzwerk (5) als ein redundanter logischer Ring (10) aufgebaut ist, und wobei der Ring (10) einen Lichtwellenleiter (LWL) aufweist,
**dadurch gekennzeichnet, dass** eine Leitungsführung des Ring (10) doppelt ausgelegt ist, wobei die beiden Lichtwellenleiter auf unterschiedlichen Wegen geführt sind wobei der Ring (10) mit mehreren Switches (SW1 bis SW4) verbunden ist, die sich in unterschiedlichen Feuerzonen (FZ1 bis FZ4) des Schiffes befinden, wobei die sicherheitsrelevanten Systeme und/oder die kritischen Systeme (A1, F1) mit jeweils zwei der Switches (SW1 bis SW4) verbunden sind, wobei sich die zwei Switches in unterschiedlichen Feuerzonen (FZ1 bis FZ4) des Schiffes befinden.

2. Schiff (1) nach Anspruch 1,
**dadurch gekennzeichnet, dass** die Dienste für sicherheitsrelevante Systeme einen oder mehrere der folgenden Dienste umfassen:
- einen Dienst für die Überwachungs- und Steuerungsanlagen, insbesondere einschließlich eines Dienstes für ein Notabschaltesystem und/oder insbesondere eines Dienstes für eine Steuerung wasserdichter Türen,
- einen Dienst für ein Sicherheitsmanagementsystem und optional für dessen Subsysteme,
- einen Dienst für ein Lautsprechersystem, zum Beispiel für ein Public-Anouncement-System.

3. Schiff (1) nach Anspruch 1 oder 2,
**dadurch gekennzeichnet, dass** die Dienste für nicht sicherheitsrelevante Systeme einen oder mehrere der folgenden Dienste umfassen, hiervon vorzugsweise sowohl ein Servicedienst als auch ein Komfortdienst:
- einen Dienst für Infotainment, insbesondere umfassend Information und Entertainment, vorzugsweise einschl. TV/Radio,
- einen Telefondienst,
- einen Dienst für ein Bildüberwachungssystem,
- einen Dienst für ein Kassensystem,
- einen Dienst für ein PC-Netzwerk,
- einen Dienst für Klimaanlagen-Steuergeräte,
- einen Dienst für Beleuchtung,
- einen Dienst für die Türüberwachung.

4. Schiff (1) nach einem der Ansprüche 1 bis 3,
**dadurch gekennzeichnet, dass** das Dienste integrierende Netzwerk (5) zusätzliche Dienste für besonders kritische Systeme, insbesondere eine Feuermeldeanlage (F1), umfasst.

5. Schiff (1) nach einem der Ansprüche 1 bis 4,
**dadurch gekennzeichnet, dass** für die Datenverteilung und/oder Datenanbindung, beispielsweise für die Bereitstellung von Komfort- und Servicediensten in einer Passagierkabine (40, 44), ein mit dem Ring (10) in Verbindung stehender Kabinenschnittstellenvervielfacher (KSV 1, KSV 2) vorhanden ist.

6. Schiff (1) nach Anspruch 5,
**dadurch gekennzeichnet, dass** mit dem Kabinenschnittstellenvervielfacher (KSV1, KSV2) Endgeräte für zumindest zwei unterschiedliche Dienste anbindbar sind.

7. Schiff (1) nach Anspruch 6,
**dadurch gekennzeichnet, dass** einer der Dienste ein Infotainmentdienst ist, beispielsweise ein Radio und TV-Dienst, insbesondere ein Dienst der Multimedia- und Infotainmentdienste.

8. Schiff (1) nach einem der Ansprüche 5 bis 7,
**dadurch gekennzeichnet, dass** der Kabinenschnittstellenvervielfacher (KSV1, KSV2) im Bereich der Trennwand zwischen zwei Kabinen (40, 41) angeordnet ist.

9. Schiff (1) nach einem der Ansprüche 5 bis 8,
**dadurch gekennzeichnet, dass** der Kabinenschnittstellenvervielfacher (KSV1, KSV2) zur Versorgung mehrerer in räumlicher Nähe zueinander angeordneter Kabinen (42, 43, 44) hergerichtet ist.

10. Schiff (1) nach einem der Ansprüche 5 bis 9, **dadurch gekennzeichnet, dass** der Kabinenschnittstellenvervielfacher (KSV1, KSV2) die Funktion eines Switches aufweist.

11. Schiff (1) nach einem der Ansprüche 5 bis 10,
**dadurch gekennzeichnet, dass** der Kabinenschnittstellenvervielfacher (KSV1, KSV2) zur Umwandlung von Analogtelefondaten in Voice-over-IP-Daten hergerichtet ist.

12. Schiff (1) nach einem der Ansprüche 1 bis 11,
**dadurch gekennzeichnet, dass** das Dienste integrierende Netzwerk (5) in virtuelle LAN-Gruppen unterteilt ist, wobei den virtuellen LAN-Gruppen jeweils der Datenverkehr mindestens, vorzugsweise genau eines Dienstes zugeordnet ist.

13. Schiff (1) nach einem der Ansprüche 1 bis 12 mit mehreren Decks (D1 bis D5),
**dadurch gekennzeichnet, dass** jedes Deck (D1 bis D5) mindestens einen Schnittstellenvervielfacher (SSV1 bis SSV20), der mit dem Ring (10) in Verbindung steht, aufweist.

14. Schiff (1) nach Anspruch 13,
**dadurch gekennzeichnet, dass** mindestens ein Schnittstellenvervielfacher (SSV1 bis SSV20) in einer Reihenschaltung ausgehend von einem Switch (SW1 bis SW4) eines ersten Netzsegments (15) mit dem Switch (SW1 bis SW4) eines zweiten Netzsegments (20), insbesondere als ein redundanter Schnittstellenring (35) mit doppelter Leitungsauslegung, in Verbindung steht.

15. Schiff (1) nach den Ansprüchen 13 oder 14,
**dadurch gekennzeichnet, dass** ein Schnittstellenvervielfacher (SSV1 bis SSV20) für ein Endgerät mit geringer Leistungsaufnahme, beispielsweise ein Telefon, eine integrierte Stromversorgung (POL) aufweist.

16. Schiff (1) nach einem der Ansprüche 1 bis 15,
**dadurch gekennzeichnet, dass** das Dienste integrierende Netzwerk (5) die Daten der Dienste für sicherheitsrelevante Systeme und optional die Daten der Dienste für besonders kritische Systeme mit höchster Priorität transportiert.

17. Schiff (1) nach einem der Ansprüche 1 bis 16,
**dadurch gekennzeichnet, dass** das Dienste integrierende Netzwerk (5) zumindest für zwei Dienste, insbesondere für die Dienste der sicherheitsrelevanten Systeme und optional für die Dienste der besonders kritischen Systeme, mit einheitlichen Schnittstellen und/oder einem einheitlichen Protokoll hergerichtet ist.

18. Schiff (1) nach einem der Ansprüche 1 bis 17,
**dadurch gekennzeichnet, dass** das Dienste integrierende Netzwerk (5) wenigstens zwei räumlich voneinander getrennte autarke Netzsegmente (15, 20, 25, 30) aufweist, die über den Ring (10) miteinander in Verbindung stehen.

19. Schiff (1) nach einem der Ansprüche 1 bis 18 mit mehreren Feuerzonen (FZ1 bis FZ4),
**dadurch gekennzeichnet, dass** jede der Feuerzonen (FZ1 bis FZ4) einen Netzwerkraum (NR1 bis NR4) aufweist.

20. Schiff (1) nach Anspruch 19,
**dadurch gekennzeichnet, dass** jeder Netzwerkraum (NR1 bis NR4) einen Server (S1 bis S4) und eine Telefonanlage (T1 bis T4) aufweist und in einer Sicherheitszone (SZ1, SZ2, SZ3, SZ4) mit einer über die Sicherheitsstufe der übrigen Feuerzonen (FZ1 bis FZ4) des Schiffs (1) hinausgehenden Sicherheitsanforderung angeordnet ist.

21. Schiff (1) nach einem der Ansprüche 1 bis 20,
**dadurch gekennzeichnet, dass** das Dienste integrierende Netzwerk (5) nach der Ethernet-Technologie, insbesondere nach der Ethernet-Automatic-Protection-Switching Technologie hergerichtet ist.

22. Schiff (1) nach den Ansprüchen 1 bis 21,
**dadurch gekennzeichnet, dass** das Dienste integrierende Netzwerk (5) ein oder mehrere der folgenden Protokolle nutzt:
- TCP/IP-Protokoll,
- UDP/IP-Protokoll,
- RTP/IP-Protokoll,
- RSVP-Protokoll,
- SMTP-Protokoll,
- NTP-Protokoll,
- SIP-Protokoll,
- H.323-Protokoll,
- DHCP-Protokoll,
- IGMP-Protokoll,
- EAPS-Protokoll.

## Claims

1. Ship (1) having an integrated services network (5), in particular an integrated service network, for security, safety and monitoring services and/or for multimedia and infotainment services on the ship (1), with the integrated services network (5) having both services for security or safety-relevant systems and critical systems (A1, F1), and services for non-security or non-safety-relevant systems, wherein the integrated services network (5) is in the form of a redundant logic ring (10), and wherein the ring (10) has an optical waveguide (LWL), **characterized in that** the line routing of the ring (10) is duplicated, with the two optical waveguides being routed on different paths, with the ring (10) being connected to a plurality of switches (SW1 to SW4) which are located in different fire zones (FZ1 to FZ4) of the ship, with the security or safety-relevant systems and/or the critical systems (A1 F1) each being connected to two of the switches (SW1 to SW4), and with the two switches being located in different fire zones (FZ1 to FZ4) of the ship.

2. Ship (1) according to Claim 1, **characterized in that** the services for security or safety-relevant systems comprise one or more of the following services:
- a service for the monitoring and control installations, in particular including a service for an emergency disconnection system and/or in particular a service for controlling watertight doors,
- a service for a security or safety management system and optionally for its subsystems,
- a service for a loudspeaker system, for example for a public announcement system.

3. Ship (1) according to Claim 1 or 2, **characterized in that** the services for non-security or safety-relevant systems comprise one or more of the following services, preferably both a personal service and a convenience service:
- a service for infotainment, in particular comprising information and entertainment, preferably including TV/radio,
- a telephone service,
- a service for an image monitoring system,
- a service for a sales system,
- a service for a PC network,
- a service for air-conditioning controllers,
- a service for lighting,
- a service for door monitoring.

4. Ship (1) according to one of Claims 1 to 3, **characterized in that** the integrated services network (5) has additional services for particularly critical systems, in particular a fire alarm system (F1).

5. Ship (1) according to one of Claims 1 to 4, **characterized in that** a cabin interface multiplexer (KSV 1, KSV 2) which is connected to the ring (10) is provided for data distribution and/or data linking, for example for provision of convenience and personal services in a passenger cabin (40, 44).

6. Ship (1) according to Claim 5, **characterized in that** terminals for at least two different services can be connected to the cabin interface multiplexer (KSV1, KSV2).

7. Ship (1) according to Claim 6, **characterized in that** one of the services is an infotainment service, for example a radio and TV service, in particular a multimedia and infotainment service.

8. Ship (1) according to one of Claims 5 to 7, **characterized in that** the cabin interface multiplexer (KSV1, KSV2) is arranged in the area of the partition wall between two cabins (40, 41).

9. Ship (1) according to one of Claims 5 to 8, **characterized in that** the cabin interface multiplexer (KSV1, KSV2) is designed to supply a plurality of cabins (42, 43, 44) arranged physically close to one another.

10. Ship (1) according to one of Claims 5 to 9, **characterized in that** the cabin interface multiplexer (KSV1, KSV2) has the function of a switch.

11. Ship (1) according to one of Claims 5 to 10, **characterized in that** the cabin interface multiplexer (KSV1, KSV2) is designed to convert analog telephone data to voice-over-IP data.

12. Ship (1) according to one of Claims 1 to 11, **characterized in that** the integrated services network (5) is subdivided into virtual LAN groups, with the data traffic of at least one service, and preferably one and only one service, being associated with the virtual LAN groups.

13. Ship (1) according to one of Claims 1 to 12 having a plurality of decks (D1 to D5); **characterized in that** each deck D1 to D5 has at least one interface multiplexer (SSV1 to SSV20), which is connected to the ring (10).

14. Ship (1) according to Claim 13, **characterized in that** at least one interface multiplexer (SSV1 to SSV20) is connected in a series circuit, starting from a switch (SW1 to SW4) for a first network segment (15) to the switch (SW1 to SW4) for a second network segment (20), in particular as a redundant interface ring (35) with duplicated cable routing.

15. Ship (1) according to Claim 13 or 14, **characterized in that** an interface multiplexer (SSV1 to SSV20) for a terminal with low power consumption, for example a telephone, has an integrated power supply (POL).

16. Ship (1) according to one of Claims 1 to 15, **characterized in that** the integrated services network (5) transports the data for the services for security or safety-relevant systems and, optionally, the data for the services for particularly critical systems with highest priority.

17. Ship (1) according to one of Claims 1 to 16, **characterized in that** the integrated services network (5) is designed at least for two services, in particular for the services for the security or safety-relevant systems and optionally for the services for the particularly critical systems, with standard interfaces and/or a standard protocol.

18. Ship (1) according to one of Claims 1 to 17, **characterized in that** the integrated services network (5) has at least two autonomous network segments (15, 20, 25, 30) which are physically separate from one another and are connected to one another via the ring (10).

19. Ship (1) according to one of Claims 1 to 18 having a plurality of fire zones (FZ1 to FZ4), **characterized in that** each of the fire zones (FZ1 to FZ4) has a network area (NR1 to NR4).

20. Ship (1) according to Claim 19, **characterized in that** each network area (NR1 to NR4) has a server (S1 to S4) and a telephone installation (T1 to T4) and is arranged in a security or safety zone (SZ1, SZ2, SZ3, SZ4) whose security or safety requirement goes beyond the security or safety level of the other fire zones (FZ1 to FZ4) in the ship (1).

21. Ship (1) according to one of Claims 1 to 20, **characterized in that** the integrated services network (5) is designed on the basis of Ethernet technology, in particular on the basis of Ethernet automatic protection switching technology.

22. Ship (1) according to Claims 1 to 21, **characterized in that** the integrated services network (5) uses one or more of the following protocols:
- TCP/IP protocol,
- UDP/IP protocol,
- RTP/IP protocol,
- RSVP protocol,
- SMTP protocol,
- NTP protocol,
- SIP protocol,
- H.323 protocol,
- DHCP protocol,
- IGMP protocol,
- EAPS protocol.

## Revendications

1. Navire ( 1 ) ayant un réseau ( S ) intégrant des prestations, notamment un réseau de service intégré, pour des prestations de sécurité et de contrôle et/ou pour des prestations multimédia et de divertissement sur le navire, dans lequel le réseau ( 5 ) intégrant des prestations comporte à la fois des prestations pour des systèmes de sécurité et des systèmes ( A1, F1 ) critiques et également des prestations pour des systèmes qui ne sont pas de sécurité, le réseau ( S ) intégrant des prestations étant constitué sous la forme d'un anneau ( 10 ) logique redondant et l'anneau ( 10 ) ayant un guide ( LWL ) d'ondes lumineuses,
**caractérisé en ce qu'**une conduite de ligne de l'anneau ( 10 ) est conçue en double, les deux guides d'ondes lumineuses empruntant des chemins différents, l'anneau ( 10 ) étant relié à plusieurs commutateurs ( SW1 à SW4 ) qui se trouvent dans des zones ( FZ1 à F4 ) de feu du navire différentes, les systèmes de sécurité et/ou les systèmes ( A1, F1 ) critiques étant reliés à respectivement deux des commutateurs ( SW1 à SW4 ), les deux commutateurs se trouvant dans des zones ( FZ1 à FZ4 ) de feu du navire différentes.

2. Navire ( 1 ) suivant la revendication 1,
**caractérisé en ce que** les prestations pour des systèmes de sécurité comprennent une ou plusieurs des prestations suivantes:
- une prestation pour des installations de contrôle et de commande, incluant notamment une prestation pour un système d'arrêt d'urgence et/ou notamment une prestation pour une commande de porte étanche,
- une prestation pour un système de gestion de sécurité et éventuellement pour ses sous-systèmes,
- une prestation pour un système de haut parleur, par exemple un système d'annonce au public.

3. Navire ( 1 ) suivant la revendication 1 ou 2,
**caractérisé en ce que** les prestations pour des systèmes qui ne sont pas de sécurité comprennent une ou plusieurs des prestations suivantes, parmi celles-ci de préférence à la fois une prestation de service et une prestation de confort :
- une prestation de divertissement comprenant notamment de l'information et du divertissement y compris de préférence de la TV/radio,
- une prestation de téléphone,
- une prestation pour un contrôle d'image,
- une prestation pour un système de caisse,
- une prestation pour un réseau PC,
- une prestation pour des appareils de commande d'installation de conditionnement d'air,
- une prestation pour l'éclairage,
- une prestation pour le contrôle des portes.

4. Navire ( 1 ) suivant l'une des revendications 1 à 3, **caractérisé en ce que** le réseau ( 5 ) intégrant des prestations comprend des prestations supplémentaires pour des systèmes particulièrement critiques, notamment pour une installation ( 1 ) d'avertissement d'incendie.

5. Navire ( 1 ) suivant l'une des revendications 1 à 4, **caractérisé en ce qu'**il est prévu pour la répartition de données et/ou l'entrée de données, par exemple pour la mise à disposition de prestations de confort et de service dans une cabine ( 40, 44 ) de passager, un multiplicateur ( KSV 1, KSV 2 ) d'interface de cabine en liaison avec l'anneau ( 10 ).

6. Navire ( 1 ) suivant la revendication 5,
**caractérisé en ce que** des terminaux pour au moins deux prestations différentes peuvent être reliés au multiplicateur ( KSV1, KSV2 ) d'interface de cabine.

7. Navire ( 1 ) suivant la revendication 6,
**caractérisé en ce que** l'une des prestations est une prestation de divertissement, par exemple une prestation radio et TV, notamment une prestation multimédia et de divertissement.

8. Navire ( 1 ) suivant l'une des revendications 5 à 7,
**caractérisé en ce que** le multiplicateur ( KSV1, KSV2 ) d'interface de cabine est disposé dans la zone de la cloison entre deux cabines ( 40, 41 ).

9. Navire ( 1 ) suivant l'une des revendications 5 à 8,
**caractérisé en ce que** le multiplicateur ( KSV1, KSV2 ) d'interface de cabine est conçu pour l'alimentation de plusieurs cabines ( 42, 43, 44 ) disposées à proximité les unes des autres dans l'espace.

10. Navire ( 1 ) suivant l'une des revendications 5 à 9,
**caractérisé en ce que** le multiplicateur ( KSV1, KSV2 ) d'interface de cabine comporte la fonction d'un commutateur.

11. Navire ( 1 ) suivant l'une des revendications 5 à 10,
**caractérisé en ce que** le multiplicateur ( KSV1, KSV2 ) d'interface de cabine est conçu pour la transformation de données de téléphone analogiques en données voice-over-IP.

12. Navire ( 1 ) suivant l'une des revendications 1 à 11,
**caractérisé en ce que** le réseau ( 5 ) intégrant des prestations est subdivisé en groupes LAN virtuels, respectivement le trafic de données d'au moins une prestation de préférence exactement une prestation étant associé aux groupes LAN virtuels.

13. Navire ( 1 ) suivant l'une des revendications 1 à 12 comprenant plusieurs ponts ( D1 à D5 ),
**caractérisé en ce que** chaque pont ( D1 à D5 ) a au moins un multiplicateur ( SSV1 à SSV20 ) d'interface qui est en liaison avec l'anneau ( 10 ).

14. Navire ( 1 ) suivant la revendication 13,
**caractérisé en ce qu'**au moins un multiplicateur ( SSV1 à SSV20 ) d'interface est, dans un circuit série partant d'un commutateur ( SW1 à SW4 ) d'un premier segment ( 15 ) de réseau, en liaison avec le commutateur ( SW1 à SW4 ) d'un deuxième segment ( 20 ) de réseau, notamment sous la forme d'un anneau ( 35 ) d'interface redondant ayant une conception à deux lignes.

15. Navire ( 1 ) suivant l'une des revendications 13 ou 14,
**caractérisé en ce qu'**un multiplicateur ( SSV1 à SSV20 ) d'interface comporte, pour un terminal ayant une petite puissance absorbée, par exemple pour un téléphone, une alimentation ( POL ) en courant intégrée.

16. Navire ( 1 ) suivant l'une des revendications 1 à 15,
**caractérisé en ce que** le réseau ( 5 ) intégrant des prestations transporte les données des prestations pour des systèmes de sécurité et éventuellement les données des prestations pour des systèmes particulièrement critiques avec une priorité très grande.

17. Navire ( 1 ) suivant l'une des revendications 1 à 16,
**caractérisé en ce que** le réseau ( 5 ) intégrant des prestations est conçu pour au moins deux prestations, notamment pour les prestations du système de sécurité et éventuellement pour les prestations des systèmes particulièrement critiques, en ayant des interfaces unitaires et/ou un programme unitaire.

18. Navire ( 1 ) suivant l'une des revendications 1 à 17,
**caractérisé en ce que** le réseau ( 5 ) intégrant des prestations comporte au moins deux segments ( 15, 20, 25, 30 ) de réseau autonomes séparés l'un de l'autre dans l'espace et en liaison entre eux par l'anneau ( 10 ).

19. Navire ( 1 ) suivant l'une des revendications 1 à 18 comprenant plusieurs zones ( FZ1 à FZ4 ) de feu, **caractérisé en ce que** chacune des zones ( FZ1 à FZ4 ) de feu a un espace ( NR1 à NR4 ) de réseau.

20. Navire ( 1 ) suivant la revendication 19,
**caractérisé en ce que** chaque espace ( NR1 à NR4 ) de réseau comporte un serveur ( S1 à S4 ) et une installation ( T1 T4 ) téléphonique et est disposé dans une zone ( SZ1, SZ2, SZ3, SZ4 ) de sécurité ayant une exigence de sécurité allant au-delà de l'échelon de sécurité des autres zones ( FZ1 à FZ4 ) de feu du navire ( 1 ).

21. Navire ( 1 ) suivant l'une des revendications 1 à 20,
**caractérisé en ce que** le réseau ( 5 ) intégrant des prestations est conçu suivant la technologie éthernet notamment suivant la technologie éthernet-automatic-protection-switching.

22. Navire ( 1 ) suivant l'une des revendications 1 à 21,
**caractérisé en ce que** le réseau ( 5 ) intégrant des prestations utilise un ou plusieurs des programmes suivants :
- Programme TCP/IP
- Programme UDP/IP
- Programme RTP/IP
- Programme RSVP
- Programme SMTP
- Programme NTP
- Programme SIP
- Programme H.323
- Programme DHCP
- Programme IGMP
- Programme EAPS
